# FASCICULE DE BREVET EUROPEEN

(11) **EP 2 135 060 B1**
(45) Date de publication et mention de la délivrance du brevet: **09.09.2015**
(21) Numéro de dépôt: 08787818.7
(22) Date de dépôt: 19.03.2008
(51) Int. Cl.: G01N 21/3504

(54) **DISPOSITIF DE DETECTION OPTIQUE DE GAZ A DISTANCE**
VORRICHTUNG ZUR OPTISCHEN FERNERKENNUNG VON GAS
DEVICE FOR THE REMOTE OPTICAL DETECTION OF GAS

(30) Priorité: 22.03.2007 FR 0702091
(43) Date de publication de la demande: 23.12.2009
(73) Titulaire: Bertin Technologies S.A., 78180 Montigny-le-Bretonneux (FR)
(72) Inventeur: MAILLART, Jean-Luc, F-13320 Bouc Bel Air (FR); ROUCH, Nicolas, F-91400 Orsay (FR); SOULIE, Emmanuel, F-13090 Aix En Provence (FR); BERNASCOLLE, Philippe, F-83170 Tourves (FR)
(74) Mandataire: Ramey, Daniel
(86) Numéro de dépôt international: PCT/FR2008/000365
(87) Numéro de publication internationale: WO 2008/135654

(56) Documents cités:
- WO-A-00/42415
- US-A- 3 662 171
- US-A- 5 306 913
- US-A1- 2005 156 111
- US-A1- 2005 276 080
- US-A1- 2006 176 373

## Description

L'invention concerne un dispositif de détection optique de gaz à distance, applicable notamment à la surveillance de sites industriels tels que des usines de produits chimiques, des raffineries, des installations de stockage de gaz, etc.

On connaît par les documents EP-A-0 544 962 et WO 03/044499, un dispositif de ce type qui comprend une caméra thermique ou un imageur infrarouge associé à un filtre de mesure et à un filtre de référence qui sont placés tour à tour sur l'axe de visée de la caméra ou de l'imageur, le filtre de mesure ayant une bande de transmission qui comprend au moins une raie d'absorption spécifique d'un gaz recherché et étant sensible à la présence de ce gaz, le filtre de référence ayant une bande de transmission comparable à celle du filtre de mesure mais ne comprenant pas la ou les raies d'absorption du gaz recherché et étant donc insensible à la présence de ce gaz.

Le principe de la mesure consiste à utiliser le fond de la scène observée comme source infrarouge et à mettre en évidence la présence du gaz recherché sur la ligne de visée et à calculer sa concentration par un traitement différentiel des images infrarouges, de façon spatiale pour traiter les flux issus de points à températures différentes de la zone observée, de façon spectrale pour différencier le gaz recherché du fond de scène et de façon temporelle pour éliminer les fausses alarmes et les détections intempestives.

De préférence, ce dispositif fonctionne dans la bande IR-III (de 8 à 14 µm) qui est plus étendue que la bande IR-II (de 3 à 5 µm) et qui permet de recueillir davantage de flux, l'absorption atmosphérique étant en outre plus faible dans la bande IR-III que dans la bande IR-II.

Dans ce dispositif connu, la caméra utilisée est une caméra refroidie qui est logée dans un boîtier approprié avec ses moyens de refroidissement et qui est reliée à une armoire contenant tous les moyens d'alimentation électrique, de commande de la caméra et des filtres et d'exploitation des signaux obtenus, cet ensemble étant lourd, volumineux et devant être installé à demeure.

La présente invention a notamment pour but de perfectionner ce dispositif connu, d'améliorer ses performances et d'augmenter ses possibilités d'utilisation.

Elle propose à cet effet un dispositif de détection optique de gaz à distance, comprenant une caméra infrarouge associée à des filtres de mesure et de référence montés successivement sur l'axe de visée de la caméra et des moyens de traitement des signaux fournis par la caméra et correspondant aux flux d'au moins deux plages à température différente d'une zone observée, caractérisé en ce qu'il comprend un boîtier de détection relié à un boîtier d'alimentation électrique, le boîtier de détection comprenant un détecteur infrarouge à matrice de photodétecteurs et fixé sur un support motorisé guidé en déplacement axial à l'intérieur du boîtier de détection pour le réglage de la mise au point optique due à une dérive thermique afin de compenser cette dérive sans modification spatiale de la scène observée, un ensemble de filtres porté par un disque rotatif, cet ensemble étant agencé entre l'objectif et le détecteur et comprenant des moyens motorisés pour amener successivement chaque filtre sur l'axe de visée de l'objectif et du détecteur, le boîtier de détection comprenant également des cartes électroniques de pilotage du détecteur, d'acquisition et de numérisation des signaux infrarouges et de commande des moyens de rotation du disque à filtres, ainsi qu'un processeur chargé de la commande du fonctionnement du boîtier de détection et de l'application d'algorithmes de détection de gaz aux signaux fournis par le détecteur.

Le dispositif selon l'invention présente l'avantage, par rapport au dispositif connu décrit ci-dessus, d'être compact, autonome et facilement transportable, d'être plus facilement implantable sur site et d'avoir une capacité de détection multi-gaz, notamment grâce à l'intégration dans le boîtier de détection des différentes cartes électroniques de commande et d'exploitation et du processeur de traitement des signaux fournis par le détecteur pour la détection d'un ou de plusieurs gaz recherchés et de leur concentration sur la ligne de visée.

L'ensemble de filtres et l'objectif infrarouge sont avantageusement amovibles et remplaçables par un ensemble de filtres et par un objectif ayant des caractéristiques différentes, ce qui élargit le champ des utilisations du dispositif et permet de l'adapter à des tâches très spécifiques.

Selon d'autres caractéristiques de l'invention :
- le boîtier de détection comprend des moyens motorisés de recouvrement et d'obturation de l'objectif infrarouge par un clapet comportant un corps noir, pour la protection de l'objectif pendant son transport et son stockage et pour une ré-uniformisation périodique de l'image infrarouge fournie par le détecteur, à des fins de compensation des dérives thermiques et d'adaptation aux variations thermiques de la scène observée ;
- le boîtier de détection comprend également une caméra matricielle du type CCD ou CMOS par exemple, pour l'observation en lumière visible de la zone visée ;
- le boîtier de détection comprend également des moyens de liaison à une interface homme-machine du type écran-clavier, et des moyens de connexion à un réseau comprenant des moyens de connexion à d'autres boîtiers de détection du même type et à un système central de traitement de l'information ;
- le détecteur comprend une matrice non refroidie de micro-bolomètres :
- le boîtier de détection comprend également des moyens, tels par exemple qu'un compas à trois axes, pour le repérage de l'orientation de l'axe de visée en site, gisement et azimut ;
- le boîtier de détection est à double paroi, au moins sur le dessus et sur les côtés et comporte une visière avant de protection de l'objectif infrarouge ;
- le boîtier de détection est monté sur une plateforme d'orientation manuelle ou sur une tourelle motorisée.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la Figure 1 représente schématiquement un dispositif connu de détection optique d'un gaz à distance ;
- la Figure 2 est un graphe illustrant le principe de la détection d'un gaz au moyen de ce dispositif ;
- la Figure 3 représente schématiquement un dispositif de détection selon l'invention ;
- la Figure 4 est une vue en coupe axiale du boîtier de détection de ce dispositif.

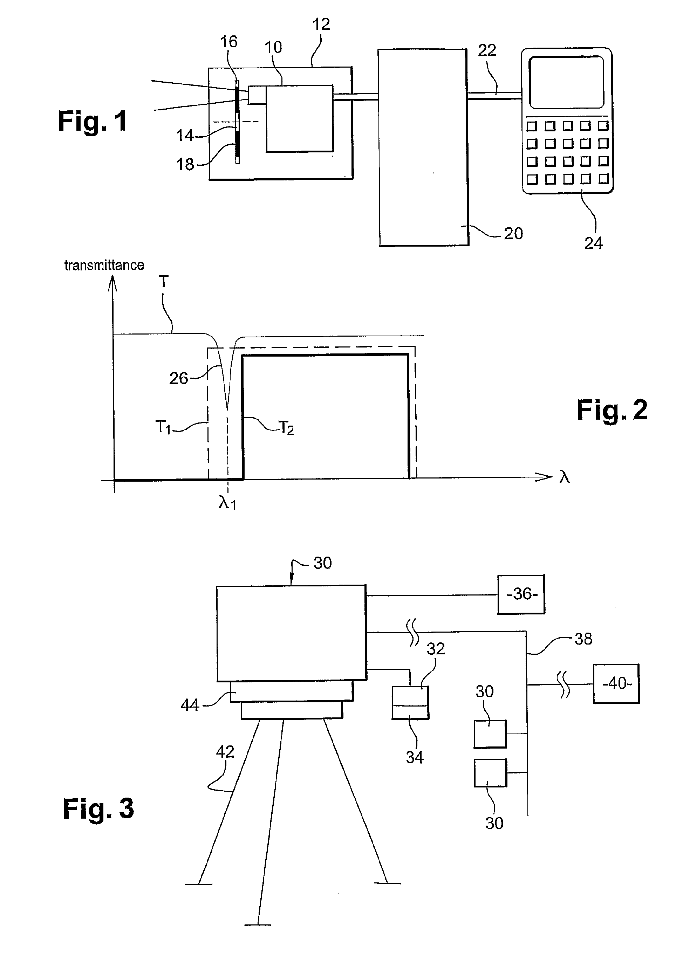

On a représenté schématiquement en figure 1 un dispositif connu de détection optique de gaz à distance, comprenant une caméra infrarouge 10, de préférence du type refroidi, qui est logée dans un boîtier thermiquement isolant 12 comprenant également une roue 14 portant un filtre de mesure 16 et un filtre de référence 18 qui peuvent être amenés tour à tour sur l'axe de visée de la caméra 10.

Le dispositif comprend également une armoire 20 d'alimentation électrique, de commande et d'exploitation, qui est reliée à la caméra 10 et à ses moyens de refroidissement, ainsi qu'à des moyens d'entraînement en rotation de la roue 14 portant les filtres, et qui comprend des moyens 22 de connexion à un système de traitement de l'information, tel par exemple qu'un ordinateur portable 24, l'armoire 20 pouvant également être connectée en réseau à une unité centrale de traitement.

Le principe de la mesure est illustré par le graphe de la figure 2, qui représente la variation de la transmittance T d'un gaz recherché en fonction de la longueur d'onde λ, ainsi que la transmittance T1 du filtre de mesure et la transmittance T2 du filtre de référence sur une plage de longueurs d'onde correspondant à la bande IR-III (8 à 14 µm).

La courbe T de la transmittance du gaz présente une raie d'absorption 26 à une longueur d'onde λ1, l'amplitude de cette raie d'absorption étant fonction de la concentration du gaz et sa largeur étant par exemple de l'ordre de quelques dizaines ou centaines de nm.

La courbe de transmittance T1 des filtres de mesure inclut la longueur d'onde λ1 de la raie d'absorption du gaz détecté et s'étend sur une bande de longueurs d'onde qui est nettement supérieure à la largeur de cette raie d'absorption.

La courbe de transmittance T2 du filtre de référence est en quelque sorte complémentaire de la raie d'absorption 26 du gaz par rapport à la transmittance T1 du filtre de mesure, puisqu'elle s'étend sur sensiblement la même bande de longueurs d'onde que la transmittance T1 du filtre de mesure mais ne comprend pas la raie d'absorption 26.

Lorsque le filtre de mesure 16 est placé sur l'axe optique de la caméra 10, le flux reçu par cette caméra est fonction de la présence ou de l'absence d'un nuage du gaz recherché dans la zone observée, et de la concentration de ce gaz sur la ligne de visée de la caméra.

Quand le filtre de référence 18 est placé sur l'axe optique de la caméra 10, le flux reçu est indépendant de la présence ou de l'absence du gaz recherché sur la ligne de visée.

Le rapport des flux qui sont reçus successivement par la caméra 10, à travers le filtre de mesure 16 puis à travers le filtre de référence 18, fournit une grandeur qui est fonction de la concentration du gaz recherché dans la zone observée et qui est indépendante de la température et de la transmission du système optique.

De plus, on détecte successivement, à travers les deux filtres, les flux fournis par deux points ou deux plages à température différente de la zone observée, ces deux points ou ces deux plages étant vus par la caméra 10 à travers le nuage de gaz recherché, ce qui permet de s'affranchir de l'émission propre du nuage de gaz en faisant la différence des flux provenant de ces deux points ou de ces deux plages à travers le filtre de mesure, puis leur différence à travers le filtre de référence, et en faisant ensuite le rapport de ces différences.

On peut également, comme décrit notamment dans le document WO 03/044499, utiliser pour la détection de plusieurs gaz un ensemble de filtres dont les bandes de transmission sont déterminées les unes par rapport aux autres en fonction des raies d'absorption des gaz à détecter, de façon à ce qu'un filtre utilisable comme filtre de référence pour la détection d'un gaz, soit utilisable comme filtre de mesure pour la détection d'un autre gaz, ou inversement, les filtres étant associés par couples ou par groupes, chaque couple ou groupe étant destiné à la détection d'un ou de plusieurs gaz.

On peut aussi utiliser un ensemble de filtres ayant des bandes de transmission qui sont échelonnées sur une bande de longueurs d'onde d'observation et qui se chevauchent éventuellement, pour obtenir une image de la zone observée dans chaque bande de transmission, les images obtenues étant ensuite sommées pour reconstituer des images vues à travers des filtres de mesure à bande large et des images vues à travers des filtres de référence à bande large.

Le dispositif de détection optique de gaz à distance selon l'invention diffère essentiellement de ce dispositif connu en ce que, comme représenté schématiquement en Figure 3, le boîtier de détection 30 comprend, non seulement, un détecteur infrarouge de préférence à matrice non refroidie de micro-bolomètres (ce qui permet une surveillance en continu sur de longues périodes), un objectif infrarouge et un ensemble motorisé de filtres mais également un ensemble de cartes électroniques de pilotage du détecteur infrarouge et d'acquisition et de numérisation des signaux infrarouges fournis par ce détecteur, et des cartes de commande des différents mécanismes contenus dans ce boîtier, ainsi que des moyens de repérage de l'orientation de l'axe de visée, une caméra CCD ou CMOS couleur pour l'observation de la zone observée en lumière visible, un processeur de traitement pour le pilotage de l'ensemble des moyens utilisés et de l'application d'algorithmes de détection de gaz aux signaux obtenus, et des circuits électroniques de servitude assurant la distribution et la protection des circuits d'alimentation interne du boîtier 30, à partir de l'alimentation électrique générale fournie par un boîtier externe 32, raccordé à une batterie 34 ou un réseau de distribution électrique.

Le boîtier de détection 30 est relié à une interface homme-machine 36 et à un réseau 38 comportant des moyens de connexion à d'autres boîtiers de détection 30 du même type et à une unité centrale 40 de traitement de l'information située à distance. Le boîtier de détection 30 peut être monté sur une plateforme d'orientation manuelle, portée par un trépied 42 ou sur une tourelle motorisée 44 commandée et alimentée depuis le boîtier de détection 30.

Dans un mode de réalisation particulier de l'invention, le boîtier de détection 30 a des dimensions de l'ordre de 670mm x 280mm x 330mm et un poids d'environ 18 kg et le boîtier d'alimentation 32 muni de la batterie 34 a des dimensions de l'ordre de 170mm x 120mm x 125mm et un poids d'environ 4 kg de sorte que l'ensemble du dispositif selon l'invention est transportable, facilement implantable sur site et autonome.

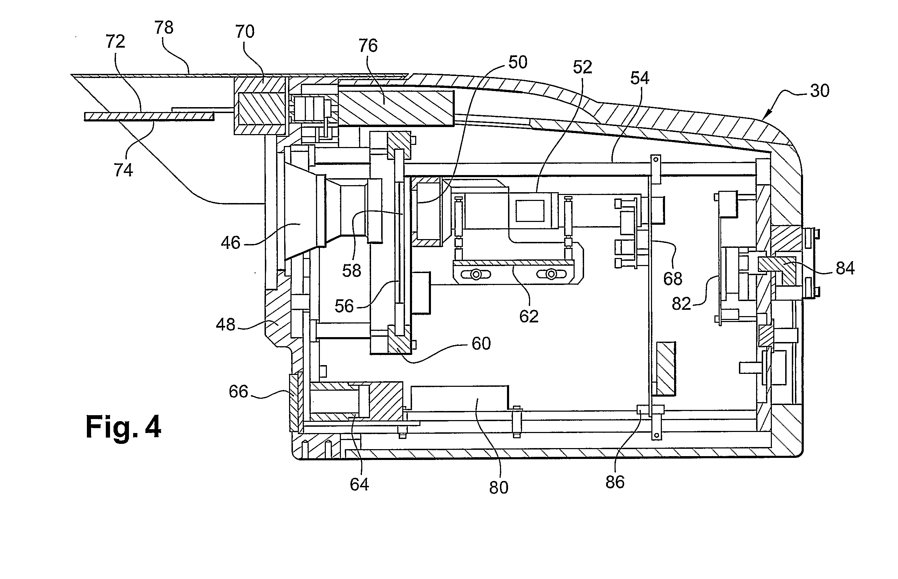

De façon plus détaillée, le boîtier de détection 30 comprend comme représenté en figure 4, un objectif infrarouge 46 fixé par son extrémité avant derrière un hublot de la paroi avant 48 du boîtier 30 et un détecteur infrarouge 50 à matrice non refroidie de micro-bolomètres qui est monté derrière l'objectif 46 sur un support motorisé 52, guidé à l'intérieur du boîtier 30 sur un châssis 54 qui porte les composants du boîtier de détection, le déplacement axial du support 52 du détecteur 50 permettant une mise au point optique en fonction des conditions de fonctionnement (caractéristiques de l'objectif 46, température de fonctionnement, configuration de l'ensemble de filtres, etc). Cette disposition présente l'avantage de conserver le grandissement et le champ exact de prise de vue en cas de modification de la mise au point due à une dérive thermique, et donc de compenser cette dérive sans modification spatiale de la scène observée en termes de champ et de résolution d'analyse.

Un disque 56 portant des filtres 58 est placé entre l'extrémité arrière de l'objectif 46 et le détecteur 50 et est monté de façon amovible dans un support 60 qui comporte des moyens motorisés de rotation du disque 56 et des moyens d'indexation pour le repérage de la position angulaire du disque autour de son axe de rotation et du filtre placé sur l'axe de l'objectif 46, le nombre de filtres 58 portant par le disque 56 étant par exemple de 6.

Des circuits électroniques de pilotage du détecteur 50 et d'acquisition et de numérisation des signaux infrarouges reçus par le détecteur, sont montés en 62 dans le boîtier, derrière le détecteur 50.

Une caméra CCD ou CMOS 64 est montée dans le boîtier 30 sous l'objectif infrarouge 46, derrière un hublot 66 de la paroi avant du boîtier pour prendre des images en lumière visible de la zone observée.

Des moyens électroniques 68 de contrôle-commande chargés du pilotage des différents mécanismes du boîtier 30 sont portés par le châssis 54 en arrière du détecteur 50 et de son support 52, ces mécanismes comprenant le disque 56 motorisé portant les filtres 58, le support motorisé 52 du détecteur 50, des moyens de contrôle de température, ainsi que des moyens 70 de recouvrement et de protection de l'objectif 46, qui sont portés par la partie supérieure de la face avant 48 du boîtier et qui peuvent pivoter entre une position d'utilisation du détecteur 50, représentée en Figure 4, et une position rabattue sur l'extrémité avant de l'objectif 46, ces moyens 70 comprenant un clapet 72 portant un corps noir 74 sur sa face destinée à recouvrir l'extrémité avant de l'objectif 46 et des moyens moteurs 76 montés à l'intérieur du boîtier 30 et permettant de faire pivoter le clapet 72 autour d'un axe transversal entre ses deux positions précitées.

Le clapet 72 permet de recouvrir et d'obturer l'extrémité avant de l'objectif 46, pour le protéger pendant les périodes de non utilisation du détecteur 50, notamment pendant le transport et le stockage du boîtier 30, le corps noir 74 placé sur l'extrémité avant de l'objectif 46 permettant une ré-uniformisation périodique de l'image infrarouge pour adaptation aux variations thermiques de la zone observée et compensation des dérives thermiques de l'ensemble des composants de la chaîne complète d'acquisition d'images, y compris l'objectif 46 et le hublot derrère lequel il est placé.

Le mécanisme 70 est monté à l'avant du boîtier 30 sous une visière 78 fixée sur la paroi supérieure du boîtier 30 et s'étendant vers l'avant, pour la protection de l'objectif 46 contre un éclairement direct par les rayons du soleil.

Une protection complémentaire contre les échauffements résultant de l'exposition au soleil est assurée par une double paroi du boîtier 30 sur ses faces latérales et sa face supérieure comme représenté en Figure 4.

Des moyens 80 sont montés à l'intérieur du boîtier, par exemple sous le support motorisé 52 du détecteur 50, pour le repérage de l'orientation de l'axe de visée, en gisement, site et azimut, ces moyens comprenant par exemple un compas à trois axes.

La face arrière du boîtier 30 porte, à l'intérieur du boîtier, un processeur 82 chargé du pilotage de l'ensemble des composants du boîtier de détection, et de l'application des algorithmes de détection de gaz aux signaux fournis par le détecteur 50, le processeur étant chargé aussi des communications avec les moyens externes (interface homme-machine 36, réseau 38, unité centrale 40) et de la commande de la tourelle motorisée 44 sur laquelle le boîtier 30 peut être fixé. Le processeur 82 se trouve dans un compartiment arrière du boîtier 30 qui est isolé du détecteur infrarouge 50 situé à l'avant du boîtier et qui est par ailleurs en contact avec des moyens de refroidissement 84 comprenant des radiateurs et des ventilateurs permettant d'évacuer la chaleur par la face arrière du boîtier 30.

Enfin des moyens électroniques 86 montés à l'arrière du boîtier sur le châssis 54 sont reliés au boîtier d'alimentation 32 pour assurer la distribution d'énergie électrique et la protection des moyens d'alimentation interne du boîtier 30.

Le dispositif selon l'invention fonctionne de la façon suivante :
- au démarrage, les six filtres portés par le disque 56 sont utilisés tour à tour pour détecter l'ensemble des gaz qui sont détectables à l'aide des combinaisons des six filtres, le cycle de rotation du disque étant alors continu et chacune des six voies spectrales correspondant aux six disques du filtre étant utilisée pour l'acquisition de signaux.

En variante, un opérateur peut sélectionner certains gaz parmi ceux qui sont détectables au moyen des combinaisons des six filtres du disque 56, et limiter les acquisitions de signaux aux filtres correspondant aux gaz sélectionnés. Cela permet, en fonction du nombre de voies spectrales nécessaires, d'accélérer le cycle d'analyse. Cette sélection peut se faire, soit localement au moyen de l'interface homme-machine 36, soit à distance depuis l'unité centrale 40 via le réseau 38.

La détection est active dans toute l'image formée par l'objectif 46 sur le détecteur 50. La première analyse de la scène imaginée nécessite environ 30 à 40 secondes pour arriver à une performance optimale de détection. Ensuite, les mesures réalisées et l'affichage peuvent être rafraîchis avec une périodicité de l'ordre de 2 secondes.

L'opérateur peut également sélectionner, dans l'image formée sur le détecteur 50, des zones particulières, qui seront traitées comme des zones d'intérêt ou comme des zones interdites selon les cas.

De façon générale, l'invention permet d'assurer une surveillance en continu d'un site observé sur de longues périodes et sans intervention sur les réglages, de s'affranchir de l'incidence des variations de température de la scène observée sur la détermination des concentrations des gaz détectés, de réduire les fausses alarmes, et d'améliorer le temps de réponse du dispositif et sa sélectivité spectrale.

## Revendications

1. Dispositif de détection optique de gaz à distance, comprenant un caméra infrarouge associée à des filtres de mesure et de référence (58) montés successivement sur l'axe de visée de la caméra et des moyens de traitement des signaux fournis par la caméra et correspondant aux flux d'au moins deux plages à température différente d'une zone observée, un boîtier de détection (30) relié à un boîtier (32) d'alimentation électrique, le boîtier de détection (30) comprenant un détecteur infrarouge (50) à matrice de photodétecteurs et fixé sur un support motorisé (52) guidé en déplacement axial à l'intérieur du boîtier de détection (30) pour le réglage de la mise au point optique due à une dérive thermique afin de compenser cette dérive sans modification spatiale de la scène observée, un objectif infrarouge (46) monté en avant du détecteur (50), un ensemble de filtres (58) porté par un disque rotatif (56), cet ensemble étant agencé entre l'objectif (46) et le détecteur (50) et comprenant des moyens motorisés pour amener successivement chaque filtre sur l'axe optique de l'objectif et du détecteur, le boîtier de détection (30) comprenant également des cartes électroniques de pilotage des détecteurs (50), d'acquisition et de numérisation des signaux infrarouge, de commande des moyens de rotation du disque (56) portant les filtres (58), et un processeur (82) chargé de la commande du fonctionnement du boîtier de détection et de l'application d'algorithmes de détection de gaz aux signaux fournis par le détecteur (50).

2. Dispositif selon la revendication 1, **caractérisé en ce que** le boîtier de détection (30) comprend des moyens motorisés (70) de recouvrement et d'obturation de l'objectif infrarouge (46) par un clapet (72) comportant un corps noir (74) pour la protection de l'objectif et pour une ré- uniformisation périodique de l'image infrarouge fournie par le détecteur, à des fins de compensation des dérives thermiques et d'adaptation aux variations thermiques de la scène observée.

3. Dispositif selon la revendication 1 ou 2, **caractérisé en ce que** le boîtier de détection (30) comprend également une caméra matricielle (64) du type CCD ou CMOS par exemple, pour l'observation en lumière visible de la zone visée.

4. Dispositif selon l'une des revendications précédentes, **caractérisé en ce que** le boîtier de détection (30) comprend des moyens de liaison à une interface homme-machine (36) du type écran-clavier.

5. Dispositif selon l'une des revendications précédentes, **caractérisé en ce que** le boîtier de détection (30) comprend des moyens de connexion à un réseau (38) comprenant des moyens de connexion à d'autres boîtiers (30) et à une unité centrale (40) de traitement de l'information.

6. Dispositif selon l'une des revendications précédentes, **caractérisé en ce que** le détecteur comprend une matrice non refroidie de micro-bolomètres.

7. Dispositif selon l'une des revendications précédentes, **caractérisé en ce que** l'objectif infrarouge (46) et l'ensemble de filtres (56, 58) sont amovibles.

8. Dispositif selon l'une des revendications précédentes, **caractérisé en ce que** le boîtier de détection (30) comprend des moyens (80), tels que par exemple un compas à trois axes, pour le repérage de l'orientation de l'axe de visée en site, gisement et azimut.

9. Dispositif selon l'une des revendications précédentes, **caractérisé en ce que** le boîtier de détection (30) est à double paroi au moins sur sa face supérieure et ses faces latérales et comprend une visière avant (78) de protection de l'objectif infrarouge (46).

10. Dispositif selon l'une des revendications précédentes, **caractérisé en ce que** le boîtier de détection (30) est monté sur une plateforme d'orientation manuelle ou sur une tourelle motorisée (44).

## Patentansprüche

1. Vorrichtung zur optischen Fernerkennung von Gas, enthaltend eine Infrarotkamera, der Mess- und Referenzfilter (58) zugeordnet sind, die nacheinander auf der Sichtachse der Kamera montiert sind, sowie Einrichtungen zum Verarbeiten der von der Kamera gelieferten Signale, die den Strömen von zumindest zwei Bereichen mit unterschiedlicher Temperatur eines zu beobachtenden Gebiets entsprechen, wobei ein Detektionsgehäuse (30) mit einem elektrischen Versorgungsgehäuse (32) verbunden ist, wobei das Detektionsgehäuse (30) einen Infrarotdetektor (50) aufweist, der mit einer Photodetektormatrix versehen und an einen motorisierten Träger (52) befestigt ist, der innerhalb des Detektionsgehäuses axial verschiebbar geführt ist zur Einstellung der optischen Fokussierung aufgrund einer thermischen Drift, um diese Drift ohne räumliche Veränderung der beobachteten Szenerie zu kompensieren, ein Infrarot-Objektiv (46), das vor dem Detektor (50) montiert ist, eine Anordnung von Filtern (58), die von einer drehbaren Scheibe (56) getragen wird, wobei diese Anordnung zwischen dem Objektiv (46) und dem Detektor (50) vorgesehen ist und motorisierte Einrichtungen umfasst, um jedes Filter nacheinander auf der optischen Achse vom Objektiv zum Detektor zu führen, wobei das Detektionsgehäuse (30) auch elektronische Steuerungskarten (50) zum Steuern der Detektoren (50), zum Erfassen und Digitalisieren der Infrarot-Signale, zum Steuern der Dreheinrichtungen zum Drehen der die Filter (58) tragenden Scheibe (56) und einen Prozessor (82) aufweist, der mit der Steuerung des Betriebs des Detektionsgehäuses und mit der Anwendung von Algorithmen zur Detektion von Gas auf die vom Detektor (50) gelieferten Signale.

2. Vorrichtung nach Anspruch 1, **dadurch gekennzeichnet, dass** das Detektionsgehäuse (30) motorisierte Einrichtungen (70) zum Bedecken und Verschließen des Infrarot-Objektivs (46) mit einer Klappe (72) aufweist, die einen schwarzen Körper (74) zum Schutz des Objektivs und zur regelmäßigen, erneuten Vereinheitlichung des von dem Detektor gelieferten Infrarotbildes zu Zwecken der Kompensation von thermischen Driften und Anpassung auf thermische Veränderung der beobachteten Szenerie aufweist.

3. Vorrichtung nach Anspruch 1 oder 2, **dadurch gekennzeichnet, dass** das Detektionsgehäuse (30) auch eine Matrixkamera (64) beispielsweise vom Typ CCD oder CMOS zur Beobachtung des anvisierten Gebiets im sichtbaren Licht aufweist.

4. Vorrichtung nach einem der vorangehenden Ansprüche, **dadurch gekennzeichnet, dass** das Detektionsgehäuse (30) Verbindungseinrichtungen zum Verbinden mit einer Mensch-Maschine-Schnittstelle (36) vom Typ Bildschirm-Tastatur aufweist.

5. Vorrichtung nach einem der vorangehenden Ansprüche, **dadurch gekennzeichnet, dass** das Detektionsgehäuse (30) Anschlusseinrichtungen zum Anschließen an ein Netz (38) aufweist, die Anschlusseinrichtungen zum Anschließen an weitere Gehäuse (30) und an eine Zentraleinheit (40) zum Verarbeiten der Informationen aufweisen.

6. Vorrichtung nach einem der vorangehenden Ansprüche, **dadurch gekennzeichnet, dass** der Detektor eine nicht gekühlte Matrix von Mikrobolometern aufweist.

7. Vorrichtung nach einem der vorangehenden Ansprüche, **dadurch gekennzeichnet, dass** das Infrarot-Objektiv (46) und die Filteranordnung (56, 58) abnehmbar sind.

8. Vorrichtung nach einem der vorangehenden Ansprüche, **dadurch gekennzeichnet, dass** das Detektionsgehäuse (30) Einrichtungen (80) aufweist, wie etwa einen 3-Achsen-Kompass, zum Bestimmen der Ausrichtung der Sichtachse in Höhe, Seitenpeilung und Azimut.

9. Vorrichtung nach einem der vorangehenden Ansprüche, **dadurch gekennzeichnet, dass** das Detektionsgehäuse (30) zumindest an seiner Oberseite und an seinen Seitenflächen doppelwandig ausgeführt ist und ein vorderes Visier (78) zum Schutz des Infrarot-Objektivs (46) aufweist.

10. Vorrichtung nach einem der vorangehenden Ansprüche, **dadurch gekennzeichnet, dass** das Detektionsgehäuse (30) an einer Plattform zur manuellen Ausrichtung oder an einem motorisierten Geschützturm montiert ist.

## Claims

1. A remote optical gas detection device, comprising an infrared camera associated with measuring and reference filters (58) mounted successively on the sighting axis of the camera, and means for processing the signals supplied by the camera and corresponding to the fluxes of at least two areas of different temperature of an observed region, a detection housing (30) connected to an electrical power supply unit (32), the detection housing (30) comprising an infrared detector (50) with a matrix of photodetectors and fixed to a power-driven support (52) which is guided in axial movement inside the detection housing (30) enabling optical focussing due to thermal drift in order to compensate said drift without any spatial modification of the scene observed, an infrared lens (46) mounted in front of the detector (50), a filter assembly (58) held by a rotating disk (56), this assembly being arranged between the lens (46) and the detector (50) and including power-driven means for successively bringing each filter onto the sighting axis of the lens and detector, the detection housing (30) likewise including electronic boards for controlling the detector (50), for acquiring and digitizing the infrared signals and for controlling the means of rotating the disk (56) carrying the filters (58), and a processor (82) responsible for controlling the operation of the detection housing and for applying gas detection algorithms to the signals supplied by the detector (50).

2. A device according to claim 1, **characterised in that** the detection housing (30) includes power-driven means (70) for covering and closing the infrared lens (46) with a flap (72) comprising a black body (74), for protecting the lens during the transport and storage thereof and for periodic re-uniformisation of the infrared image supplied by the detector, for purposes of compensating for thermal drifts and for adapting to the thermal variations of the scene observed.

3. A device as claimed in claim 1 or 2, **characterised in that** detection housing (30) likewise includes a CCD or CMOS-type matrix array camera, e.g., for observing the targeted region under visible light.

4. A device as claimed in one of the preceding claims, **characterised in that** the detection housing (30) likewise includes means for connecting to a human-machine interface (36) of the screen-keyboard type.

5. A device as claimed in one of the preceding claims, **characterised in that** the detection housing (30) includes means for connecting to a network (38) including means of connecting to other detection housings (30) of the same type and to a central information processing system (40).

6. A device as claimed in one of the preceding claims, **characterised in that** the detector further includes an uncooled matrix of microbolometers.

7. A device as claimed in one of the preceding claims, **characterised in that** the infrared lens (46) and the filter assembly (56, 58) are removable.

8. A device as claimed in one of the preceding claims, **characterised in that** the detection housing (30) includes means (80), e.g., such as a 3-axis compass, for locating the orientation of the sighting axis with respect to elevation, relative bearing and azimuth.

9. A device as claimed in one of the preceding claims, **characterised in that** the detection housing (30) is double-walled, at least on the top and sides thereof, and includes a protective front visor (78) for the infrared lens (46).

10. A device as claimed in one of the preceding claims, **characterised in that** the detection housing (30) is mounted on a manually oriented platform or on a power-driven turret (44).
